# EUROPEAN PATENT APPLICATION

(11) **EP 3 693 104 A1**
(43) Date of publication of application: **12.08.2020**
(21) Application number: 19213196.9
(22) Date of filing: 03.12.2019
(51) Int. Cl.: B22F 3/105, B22F 8/00, B22F 9/04, B23K 9/04, B23K 26/342, B33Y 10/00, B33Y 30/00, B33Y 40/00, B33Y 40/10, B33Y 70/00, B33Y 80/00

(54) **METHODS FOR ADDITIVE MANUFACTURING WITH MASTICATED PARTICLES**

(30) Priority: 05.02.2019 US 201916267814
(71) Applicant: The Boeing Company, Chicago, IL 60606-1596 (US)
(72) Inventor: PARRISH, Catherine J., Chicago, IL Illinois 60606-1596 (US); BOL, Eric, Chicago, IL Illinois 60606-1596 (US); CHRISTODOULOU, Leo, Chicago, IL Illinois 60606-1596 (US)
(74) Representative: Duxbury, Stephen

(57) **Abstract**

A method of additively manufacturing a part is provided. The method includes flowing masticated particles through a deposition nozzle of a directed energy deposition additive manufacturing apparatus. Each particle of the masticated particles includes a surface formed by at least angular facets. The method also includes melting the masticated particles exiting the deposition nozzle with a directed energy source of the directed energy deposition additive manufacturing apparatus so as to form the part.

## Description

### BACKGROUND

### 1. Field

The disclosure relates to additive manufacturing and more particularly to methods of additively manufacturing structures with masticated particles.

### 2. Brief Description of Related Developments

Directed energy deposition additive manufacturing is the process by which parts can be made one thin layer at a time using a directed flow of, for example, a very fine particulate metal powder from a deposition nozzle. Generally, in directed energy deposition additive manufacturing, a spherical-shaped powdered metal feedstock is fed from a hopper through the deposition nozzle of the additive manufacturing apparatus. The spherical-shaped powdered metal is melted by a focused laser or other suitable energy source as it passes from the deposition nozzle and is spread on a build table or on a previously deposited layer of material. Once a single layer of the part has been completed the deposition nozzle or build table typically moves vertically away from the deposited layer in one layer increments (e.g., very small increments substantially equal to a height of the melt pool forming the deposited layers) and the deposition nozzle then proceeds to deposit the next layer of material. Once all layers are complete, the part is finished and removed from the build table.

The spherical-shaped powdered metal feedstock used in directed energy deposition additive manufacturing processes is quite costly, but provides excellent feedstock flowability from the hopper to the deposition nozzle of the process. Processes for producing spherical-shaped powdered metals include plasma rotating electrode processing, gas atomization processing, plasma atomization processing, and plasma spheroidizing. Each of these processes for producing spherical-shaped metal powders contributes significantly to the cost of the powdered metal feedstock (and hence the cost of the parts produced thereby) used in directed energy deposition additive manufacturing processes.

### SUMMARY

Accordingly, methods intended to address, at least, the above-identified concerns would find utility.

The following is a non-exhaustive list of examples, which may or may not be claimed, of the subject matter according to the present disclosure.

One example of the subject matter according to the present disclosure relates to a method of additively manufacturing a part. The method comprises: flowing masticated particles through a deposition nozzle of a directed energy deposition additive manufacturing apparatus, where each particle of the masticated particles comprises a surface formed by at least angular facets; and melting the masticated particles exiting the deposition nozzle with a directed energy source of the directed energy deposition additive manufacturing apparatus so as to form the part.

Another example of the subject matter according to the present disclosure relates to a method of additively manufacturing a part. The method comprises: flowing faceted particles through a deposition nozzle of a directed energy deposition additive manufacturing apparatus; and melting the faceted particles exiting the deposition nozzle so as to form the part.

Still another example of the subject matter according to the present disclosure relates to a method of additively manufacturing a part. The method comprises: flowing faceted particles through at least one respective deposition nozzle of a plurality of deposition heads of a directed energy deposition additive manufacturing apparatus; and melting the faceted particles exiting the at least one respective deposition nozzle so that powder particles from each deposition head form the part.

Yet another example of the subject matter according to the present disclosure relates to a method of additively manufacturing a part. The method comprises: flowing faceted particles through a deposition nozzle of a powder feed additive manufacturing apparatus; and melting the faceted particles exiting the deposition nozzle so as to form the part.

The following paragraphs A1 - D12 also form part of the present disclosure:
A1. A method of additively manufacturing a part, the method comprising:
   flowing masticated particles through a deposition nozzle of a directed energy deposition additive manufacturing apparatus,
   where each particle of the masticated particles comprises a surface formed by at least angular facets; and
   melting the masticated particles exiting the deposition nozzle with a directed energy source of the directed energy deposition additive manufacturing apparatus so as to form the part.
A2. The method of paragraph A1, wherein a particle size distribution of the masticated particles is about 40 microns to about 180 microns.
A3. The method of paragraph A1 (or A2), wherein a particle size distribution of the masticated particles is about 40 microns to about 75 microns.
A4. The method of paragraph A1(or A2 or A3), wherein the masticated particles has a flowability of less than 50 seconds per 50 grams as determined by Hall flow testing.
A5. The method of paragraph A1 (or A2 or A3 or A4), wherein the masticated particles comprises titanium.
A6. The method of paragraph A1 (or A2 or A3 or A4), wherein the masticated particles comprises steel.
A7. The method of paragraph A1 (or A2 or A3 or A4), wherein the masticated particles comprises nickel.
A8. The method of paragraph A1 (or A2 or A3 or A4), wherein the masticated particles comprises aluminum, and/or wherein the masticated particles comprise one or more of titanium, steel, nickel and aluminium.
A9. The method of any of the preceding paragraphs A1-A8 further comprising:
   storing the masticated particles in a hopper coupled to the deposition nozzle; and
   at least periodically vibrating the hopper to induce flowing of the masticated particles from the hopper to the deposition nozzle.
A10. The method of any of the preceding paragraphs A1-A9 further comprising flowing more than one type of direct energy feed particles through a respective deposition nozzle of the directed energy deposition additive manufacturing apparatus so as to form an in situ alloy,
   wherein at least one of the more than one type of direct energy feed particles comprises the masticated particles having respective surfaces formed by the at least angular facets.
A11. The method of paragraph A10, wherein each of the more than one type of direct energy feed particles comprises different mechanical properties.
A12. The method of paragraph A10 or A11 wherein another of the more than one type of direct energy feed particles comprises spherical particles.
A13. The method of any of the preceding paragraphs A1-A12 wherein the masticated particles are embrittled.
A14. The method of any of the preceding paragraphs A1-A13 wherein the masticated particles are de-embrittled.
B1. A method of additively manufacturing a part, the method comprising:
   flowing faceted particles through a deposition nozzle of a directed energy deposition additive manufacturing apparatus; and
   melting the faceted particles exiting the deposition nozzle so as to form the part.
B2. The method of paragraph B1, wherein a particle size distribution of the faceted particles is about 40 microns to about 180 microns.
B3. The method of paragraph B1 (or B2), wherein a particle size distribution of the faceted particles is about 40 microns to about 75 microns.
B4. The method of paragraph B1 (or B2 or B3), wherein the faceted particles have a flowability of less than 50 seconds per 50 grams as determined by Hall flow testing.
B5. The method of paragraph B1 (or B2 or B3 or B4), wherein the faceted particles comprise one or more of titanium, steel, nickel, and aluminum.
B6. The method of paragraph B1 (or B2 or B3 or B4 or B5), further comprising:
   storing the faceted particles in a hopper coupled to the deposition nozzle; and
   at least periodically vibrating the hopper to induce flowing of the faceted particles from the hopper to the deposition nozzle.
B7. The method of paragraph B1 (or B2-B6), further comprising flowing more than one type of direct energy feed particles through a respective deposition nozzle of the directed energy deposition additive manufacturing apparatus so as to form an in situ alloy,
   wherein at least one of the more than one type of direct energy feed particles comprises the faceted particles.
B8. The method of paragraph B7, wherein each of the more than one type of direct energy feed particles comprises different mechanical properties.
B9. The method of paragraph B7 or B8, wherein another of the more than one type of direct energy feed particles comprises spherical particles.
B10. The method of paragraph B1 (or B2-B9), wherein the faceted particles are embrittled.
B11. The method of paragraph B1 (or B2-B9), wherein the faceted particles are de-embrittled.
B12. The method of paragraph B1 (or B2-B11), wherein the faceted particles are masticated particles.
C1. A method of additively manufacturing a part, the method comprising:
   flowing faceted particles through at least one respective deposition nozzle of plurality of deposition heads of a directed energy deposition additive manufacturing apparatus; and
   melting the faceted particles exiting the at least one respective deposition nozzle so that powder particles from each deposition head form the part.
C2. The method of paragraph C1, wherein a particle size distribution of the faceted particles is about 40 microns to about 180 microns.
C3. The method of paragraph C1 (or C2), wherein a particle size distribution of the faceted particles is about 40 microns to about 75 microns.
C4. The method of paragraph C1 (or C2 or C3), wherein the faceted particles have a flowability of less than 50 seconds per 50 grams as determined by Hall flow testing.
C5. The method of paragraph C1 (or C2 or C3 or C4), wherein the faceted particles comprise one or more of titanium, steel, nickel, and aluminum.
C6. The method of paragraph C1 (or C2 or C3 or C4 or C5), further comprising:
   storing the faceted particles in a hopper coupled to the at least one respective deposition nozzle; and
   at least periodically vibrating the hopper to induce flowing of the faceted particles from the hopper to the at least one respective deposition nozzle.
C7. The method of paragraph C1 (or C2-C6), further comprising flowing more than one type of direct energy feed particles through the plurality of deposition heads so as to form an in situ alloy,
   wherein at least one of the more than one type of direct energy feed particles comprises the faceted particles.
C8. The method of paragraph C7, wherein each of the more than one type of direct energy feed particles comprises different mechanical properties.
C9. The method of paragraph C7 or C8, wherein another of the more than one type of direct energy feed particles comprises spherical particles.
C10. The method of any of the paragraphs C7-C9, wherein:
   a first type of faceted particles flows through the at least one respective deposition nozzle of one deposition head of the plurality of deposition heads; and
   a second type of faceted particles flows through the at least one respective deposition nozzle of another deposition head of the plurality of deposition heads.
C11. The method of any of the paragraphs C7-C10, wherein:
   a first type of direct energy feed particles flows through a first respective deposition nozzle of the at least one respective deposition nozzle of one deposition head of the plurality of deposition heads; and
   a second type of direct energy feed particles flows through a second respective deposition nozzle of the at least one respective deposition nozzle of the one deposition head of the plurality of deposition heads.
C12. The method of paragraph C1 (or C2-C11), wherein the faceted particles are embrittled.
C13. The method of paragraph C1 (or C2-C12), wherein the faceted particles are de-embrittled.
C14. The method of paragraph C1 (or C2-C13), wherein the faceted particles are masticated particles.
D1. A method of additively manufacturing a part, the method comprising:
   flowing faceted particles through a deposition nozzle of a powder feed additive manufacturing apparatus; and
   melting the faceted particles exiting the deposition nozzle so as to form the part.
D2. The method of paragraph D1, wherein a particle size distribution of the faceted particles is about 40 microns to about 180 microns.
D3. The method of paragraph D1 (or D2), wherein a particle size distribution of the faceted particles is about 40 microns to about 75 microns.
D4. The method of paragraph D1 (or D2 or D3), wherein the faceted particles have a flowability of less than 50 seconds per 50 grams as determined by Hall flow testing.
D5. The method of paragraph D1 (or D2 or D3 or D4), wherein the faceted particles comprise titanium, steel, nickel, and aluminum.
D6. The method of paragraph D1 (or D2 or D3 or D4 or D5), further comprising:
   storing the faceted particles in a hopper coupled to the deposition nozzle; and
   at least periodically vibrating the hopper to induce flowing of the faceted particles from the hopper to the deposition nozzle.
D7. The method of paragraph D1 (or D2-D6), further comprising flowing more than one type of direct energy feed particles through a respective deposition nozzle of the powder feed additive manufacturing apparatus so as to form an in situ alloy,
   wherein at least one of the more than one type of direct energy feed particles comprises the faceted particles.
D8. The method of paragraph D7, wherein each of the more than one type of direct energy feed particles comprises different mechanical properties.
D9. The method of paragraph D7 or D8, wherein another of the more than one type of direct energy feed particles comprises spherical particles.
D10. The method of paragraph D1 (or D2-D9), wherein the faceted particles are embrittled.
D11. The method of paragraph D1 (or D2-D10), wherein the faceted particles are embrittled.
D12. The method of paragraph D1 (or D2-D11), wherein the faceted particles are masticated particles.

### BRIEF DESCRIPTION OF THE DRAWINGS

Having thus described examples of the present disclosure in general terms, reference will now be made to the accompanying drawings, which are not necessarily drawn to scale, and wherein like reference characters designate the same or similar parts throughout the several views, and wherein:
Fig. 1A is an optical micrograph at a 50X magnification level of masticated particles in accordance with the present disclosure;
Fig. 1B is an optical micrograph at a 100X magnification level of the masticated particles of Fig. 1A in accordance with the present disclosure;
Fig. 2 is an exemplary flow diagram of an exemplary process for producing masticated particles in accordance with the present disclosure;
Fig. 3 is exemplary side view illustration of an additive manufacturing apparatus in accordance with the present disclosure;
Fig. 4 is exemplary side view illustration of an additive manufacturing apparatus in accordance with f the present disclosure;
Fig. 5 is an exemplary illustration of a portion of the additive manufacturing apparatus of one of Figs. 3 and 4 illustrating deposition of the masticated particles of Figs. 1A and 1B in accordance with the present disclosure;
Fig. 6 is an exemplary illustration of a deposition head of the additive manufacturing apparatus of one or more of Figs. 3 and 4 illustrating a flow of masticated particles through the deposition head in accordance with the present disclosure;
Fig. 7 is an exemplary illustration of a deposition head of the additive manufacturing apparatus of one or more of Figs. 3 and 4 illustrating a flow of masticated particles through the deposition head in accordance with the present disclosure; and
Fig. 8 is an exemplary flow diagram for additively manufacturing a part in accordance with the present disclosure.

### DETAILED DESCRIPTION

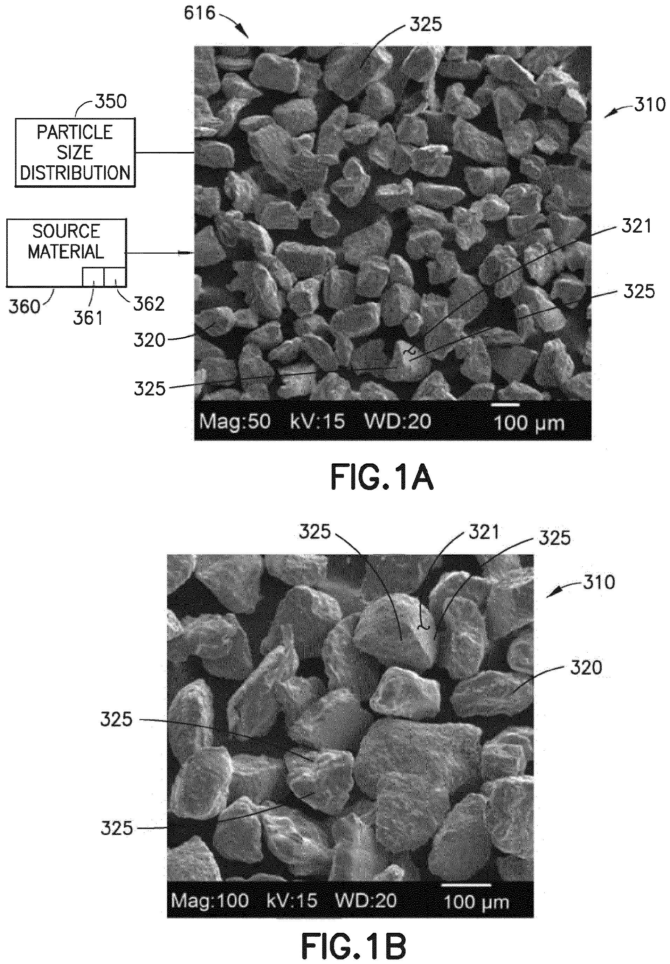

There is a need for a lower cost directed energy deposition additive manufacturing process that may decrease material lead time (and decrease lead times for parts manufactured from the material). Referring to Figs. 1A and 1B, the aspects of the present disclosure provide for direct energy feed particles in the form of masticated particles 310 that may reduce costs associated with directed energy additive manufacturing. As an example, the cost to produce spherical Ti6Al-4V additive manufacturing powder feedstock is between about $70.00 USD to about $150.00 USD per pound, where a significant reduction in quality may be seen in the less expensive spherical Ti6Al-4V additive manufacturing powder. The masticated particles 310 in accordance with the present disclosure may be produced for an estimated cost of between about $12.00 USD to about $20.00 USD per pound so as to reduce the production cost of the additive manufacturing source materials by about 75% to about 90%.

Referring to Fig. 1A, an optical micrograph at a 50X magnification level of the masticated particles 310 of the present disclosure is illustrated. Fig. 1B is an optical micrograph at a higher magnification level (e.g., 100X) of the masticated particles 310 of Fig. 1A, which more clearly exhibits the structural features of the masticated particles 310. The masticated particles 310 are particles that have been formed by grinding and/crushing a source material 360. The masticated particles 310 include a surface or surfaces 321 formed of at least angular facets 325 and may be referred to as faceted particles 320. The angular facets 325 of each faceted particle 320 may be randomly formed and may be unique from other angular facets 325 of other faceted particles 320. In one aspect, a particle size distribution 350 of the masticated particles 310 is about 40 microns to about 180 microns; while in other aspects the particle size distribution 350 of the masticated particles 310 is about 40 microns to about 75 microns. In other aspects, the masticated particles 310 may be smaller than about 40 microns or larger than about 180 microns. The masticated particles 310 may be formed of any suitable material including, but not limited to, titanium, steel, nickel, aluminum, or alloys of one or more of the aforementioned metals. In other aspects, the masticated particles 310 may comprise a polymer.

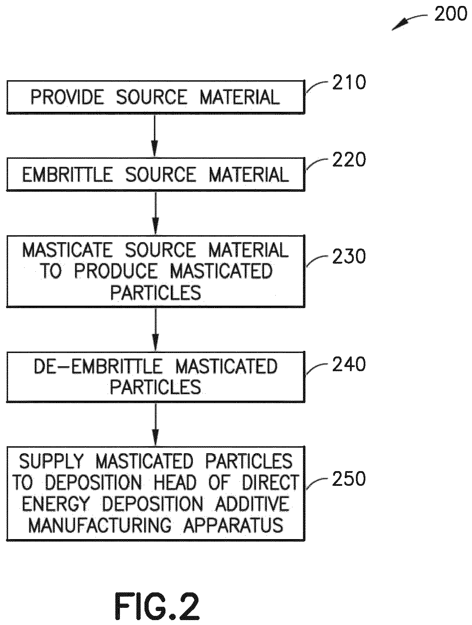

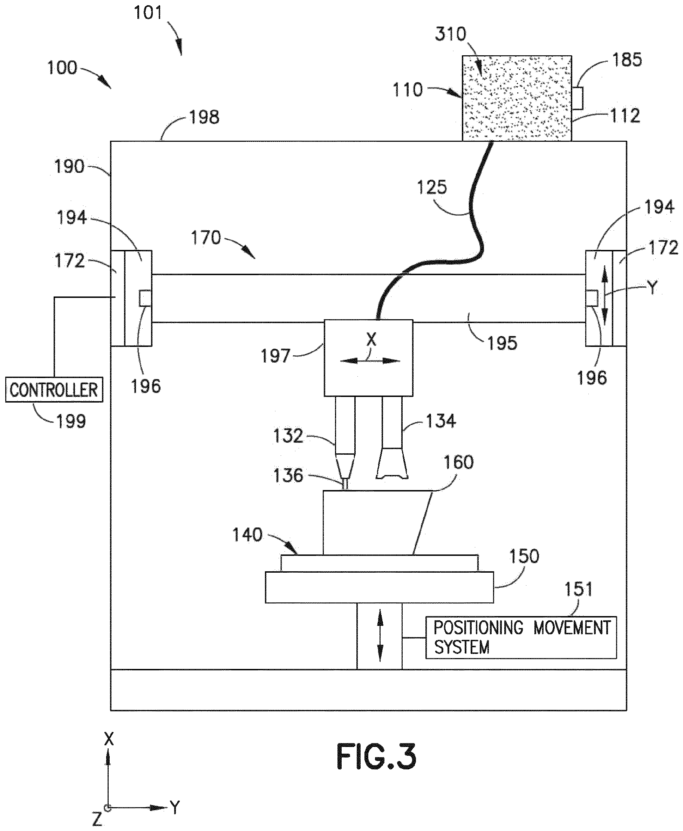

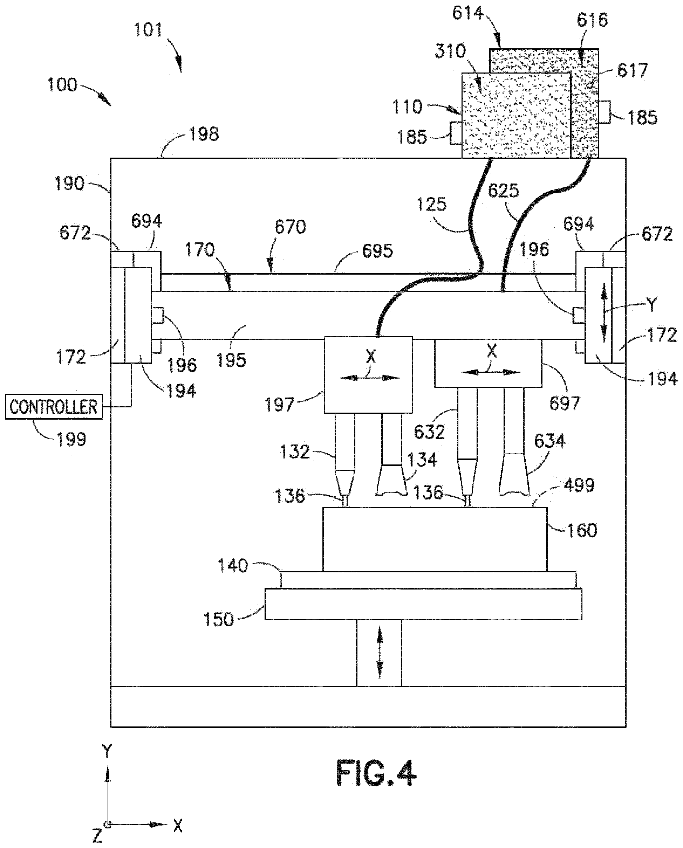

The masticated particles 310 having the surface 321 with the angular facets 325 of the present disclosure may be formed by the non-limiting exemplary method 200 illustrated in Fig. 2. For example, any suitable source material 360, such as the metals, alloys, or polymer described herein, is provided (Fig. 2, Block 210) for producing the masticated particles 310. In one aspect, the source material 360 may be a recycled source material 361, such as recycled titanium or titanium alloy scrap material. The recycled source material 361 may include machined scrap, fasteners, and/or other types of scrap material. Titanium 64 (Ti64) machined scrap is a particularly advantageous recycled source material as it may be abundantly available, which may further reduce the costs associated with producing the masticated particles 310. In other aspects, the source material may be newly manufactured material 362 (i.e., not recycled). The source material 360 is embrittled (Fig. 2, Block 220) in any suitable manner so that the source material may be masticated (i.e., crushed and or ground) into the masticated particles 310. The source material 360 may be embrittled through, as non-limiting examples, hydrogen embrittlement, cryogenic embrittlement, hydrogen sulfide embrittlement, adsorption embrittlement, liquid metal embrittlement, metal-induced embrittlement, neutron embrittlement and combinations thereof. The embrittled source material 360 is masticated in any suitable manner to produce the masticated particles 310 (Fig. 2, Block 230). Masticating the source material 360 may be performed by any suitable apparatus that grinds and/or crushes the embrittled source material 360. Suitable examples of masticating apparatus include, but are not limited to, mills, grinders, shredders, other suitable devices or a combination thereof. The masticated particles 310, after mastication, may remain embrittled. In one aspect, the masticated particles 310 may be de-embrittled (Fig. 2, Block 240) by, for example, dehydriding and/or heating the embrittled masticated particles 310. De-embrittling the masticated particles 310 may relieve any stresses that have built up in the masticated particles 310 during embrittling and mastication. The masticated particles 310 are supplied or otherwise fed to a deposition head 132 (see, e.g., Fig. 3) of a direct energy deposition additive manufacturing apparatus 100 (Fig. 2, Block 250) as illustrated as a powder feed additive manufacturing apparatus 101 in Figs. 3 and 4.

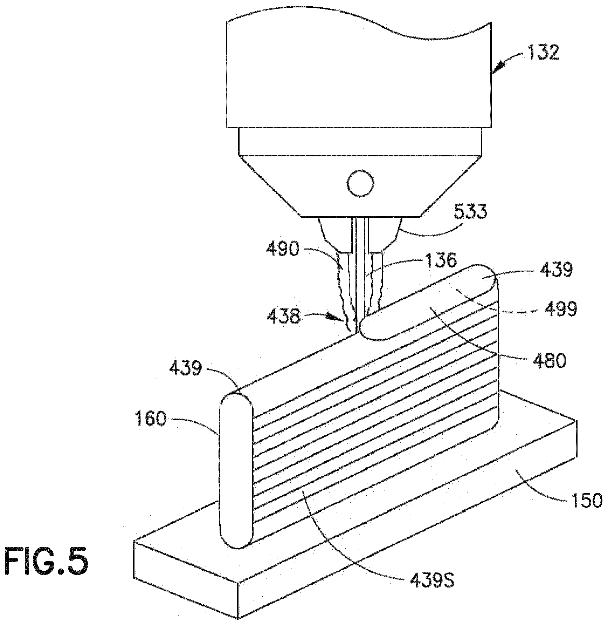

Referring to Fig. 3, an exemplary side view illustration of the directed energy deposition additive manufacturing apparatus 100 suitable for employment with the additive manufacturing methods for producing a part with masticated particles 310 is illustrated. The directed energy deposition additive manufacturing apparatus 100 may be configured for laser cladding, direct metal deposition, direct light fabrication, laser direct casting, laser forming, shape deposition manufacturing, laser engineer net shaping, laser powder fusion, laser-aided direct-metal deposition, laser-based multi-directional metal deposition, or laser aided manufacturing process where the masticated particles 310 are fed into or towards a directed energy source 136 (e.g., such as any suitable laser). The directed energy deposition additive manufacturing apparatus 100 includes a hopper 110 for storing the masticated particles 310, a deposition head 132 for depositing the masticated particles 310, and a build table 150 (which may hold a substrate 140) onto which the masticated particles 310 are deposited as a melt pool 438 (see Fig. 5) to form the part 160.

Still referring to Fig. 3, the masticated particles 310 are fed or otherwise transferred from the hopper 110 to the deposition head 132 through any suitable transfer line 125 (e.g., a conduit through which the masticated particles 310 pass). The masticated particles 310 may be gravity fed, fed with the use of an auger, and/or be pneumatically conveyed from the hopper 110 through the transfer line 125 to the deposition head 132. In one aspect, the hopper 110 may include any suitable vibrating device 185 configured to continuously or intermittently vibrate at least side walls 112 of the hopper 110 in order to initiate flow of the masticated particles 310 from the hopper 110 to the deposition head 132. The vibrating device 185 may be, for example, an oscillator, a piezoelectric actuator, or any other suitable apparatus inducing movement of the masticated particles 310 within the hopper 110.

The directed energy deposition additive manufacturing device 100 illustrated in Fig. 3 includes a frame 198 that forms an inert gas filled chamber 190 in which the deposition head 132 and in which the part 160 is produced. The deposition head 132 is disposed on a positioning movement system, referred to herein as gantry 170. The gantry 170 is controlled by any suitable programmable controller 199 for moving at least the deposition head 132 along a predetermined path in one or more of X, Y, Z directions for depositing the masticated particles 310 as the melt pool 438 (Fig. 5) so as to form part 160. The gantry 170 includes an X axis rail 195 to which a carriage 197 is movably coupled (and carried by the X axis rail 195) for movement in the X direction. The deposition head 132 is coupled to the carriage 197. The X axis rail 195 is movably coupled to and carried by a Z axis rail 196 for movement of the deposition head 132 in the Z direction. The Z axis rail 196 is coupled to and carried by a Y axis rail 194 for movement of the deposition head 132 in the Y direction. The gantry 170 includes end supports 172 that movably couple the Y axis rail 194 to the frame 198. In one aspect, a smoothing head 134 may also be coupled to the carriage 197 for shaping and smoothing deposited material 480 (in a semi-molten state - see Fig. 5) deposited on the build table 150 adjacent the melt pool 438 (see Fig. 5). In one aspect, the build table 150, instead of being fixed in position within the inert gas filled chamber 190, may include a positioning movement system 151 that is controlled by the programmable controller 199 that moves the build table in one or more of the X, Y, Z directions. Where the build table 150 is provided with a degree of freedom of movement in one of the X, Y, Z directions the corresponding degree of freedom of movement may be removed from the gantry 170.

In one aspect, referring to Fig. 4, the directed energy deposition additive manufacturing apparatus 100 may include any suitable number of deposition heads for depositing at least one type of direct energy feed particle 616, where each type of direct energy feed particle has a different material characteristic (e.g., shape, material, size, etc.). For example, Fig. 4 illustrates an exemplary side view of the directed energy deposition additive manufacturing apparatus 100 having two deposition heads 132, 632 disposed within the inert gas filled chamber 190. The deposition head 132 and the build table 150 are coupled to the frame 198 in a manner substantially similar to that described above with respect to Fig. 3. The deposition head 632 may be coupled to the frame 198 for movement in one or more of the X, Y, Z directions by a gantry 670 that is substantially similar to gantry 170 described above. For example, the gantry 670 is controlled by any suitable programmable controller 199 for moving at least the deposition head 632 along a predetermined path in one or more of X, Y, Z directions for depositing the masticated particles 310 (or other suitable direct energy feed particle 616) as a melt pool 438 (see Fig. 5) so as to form part 160. The gantry 670 includes an X axis rail 695 to which a carriage 697 is movably coupled (and carried by the X axis rail 695) for movement in the X direction. A smoothing head 634 may be coupled to the carriage 697 in a manner similar to that described herein for smoothing head 134. The deposition head 632 is coupled to the carriage 697. The X axis rail 695 is movably coupled to and carried by a Z axis rail (not shown but similar to Z axis rail 196) for movement of the deposition head 632 in the Z direction. The Z axis rail is coupled to and carried by a Y axis rail 694 for movement of the deposition head 632 in the Y direction. In other aspects, the build table 150 may be movably coupled to the frame 198 for movement in the Y direction. The gantry 670 includes end supports 672 that movably couple the Y axis rail 694 to the frame 198. The gantry 170 and the gantry 670 may be configured in any suitable manner so that the respective deposition heads 132, 632 follow the same path (i.e., one deposition head follows the other deposition head along a common path) so as to overlay/deposit material from one deposition head 132, 632 on top of material from the other deposition head 132, 632 so as to form an in situ alloy 499 (see Figs. 4 and 5).

The two deposition heads 132, 632 may provide for decreased production cycle time as well as the deposition of more than one type of direct energy feed particle 616 through the respective depositions heads 132, 632. As illustrated in Fig. 4, one hopper 110 and transfer line 125 supplies direct energy feed particles 616, such as the masticated particles 310 to one of the deposition heads 132. The second hopper 614 and transfer line 625 supplies direct energy feed particles 616 to the deposition head 632. The direct energy feed particles 616 supplied to the deposition head 632 may have the same or different characteristics than the masticated particles 310 supplied to the deposition head 132. For example, at least one of the two direct energy feed particles 616 supplied by the hoppers 110, 614 used in the directed energy deposition additive manufacturing apparatus 100 of Fig. 4 is the masticated particles 310. In one aspect, the second direct energy feed particle 616 supplied by the other hopper 110, 614 may be a conventional spherical powder having spherical particles 617. In still other aspects, both hoppers 110, 614 may supply direct energy feed particles 616 in the form of masticated particles 310, wherein the masticated particles 310 provided by hopper 110 may be different in material composition and/or in mechanical properties than the masticated particles 310 provided by the hopper 614. The supply of different types of direct energy feed particles 616 from the two hoppers 110, 614 of Fig. 4 to the respective deposition heads 132, 632 may provide for the formation of an in situ alloy 499 (see Figs. 4 and 5) using the directed energy deposition additive manufacturing apparatus 100 having multiple deposition heads 132, 632.

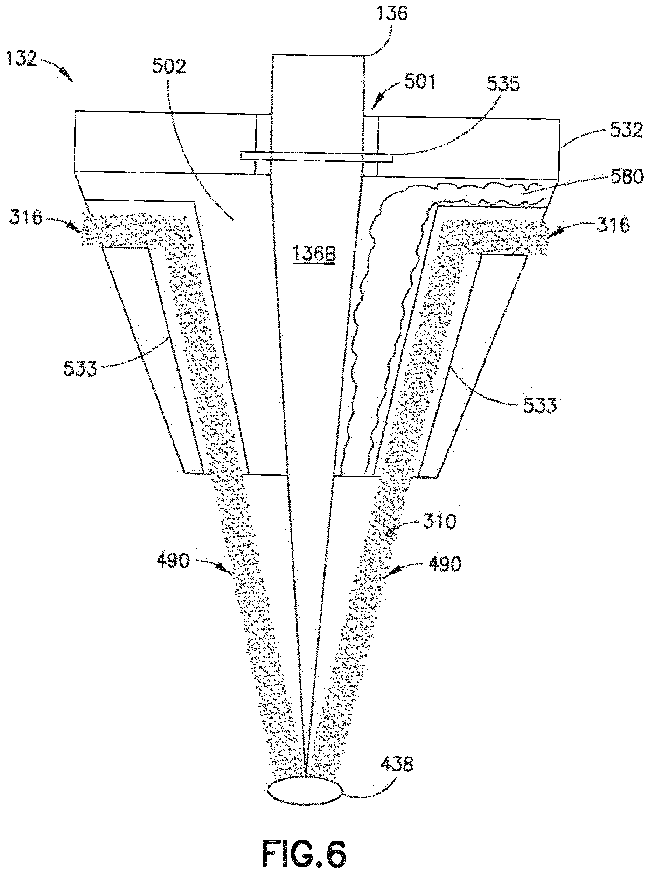

Referring to Figs. 3, 5 and 6 the deposition head 132 (noting deposition head 632 is substantially similar to deposition head 132) employs the directed energy source 136 to melt at least one direct energy feed particle stream 490 (Figs. 5 and 6) ejected from a respective deposition nozzle 533 (Figs. 5 and 6) of the deposition head 132. The directed energy source 136 melts the at least one direct energy feed particle stream 490 into the melt pool 438, which in combination with the movement of the deposition head 132 provided by the gantry 170 (Fig. 3) forms a layer of material 439 that is deposited on the build table 150 or on a previously deposited layer of material 439. The smoothing head 134 (Fig. 3) may be located adjacent the deposition head 132 so as to remove any irregularities from or shape the layer of material 439 before the deposited material cools and solidifies. Layers of material 439 are deposited one on top of the other (e.g., the deposition head 132 or the build table 150 moves in the Y direction to facilitate stacked layers of material 439S) to form the part 160. The completed part 160 may be removed from the build table 150 in any suitable manner.

Still referring to Figs. 3, 5, and 6, the deposition head 132 (again noting deposition head 632 in Fig. 4 is substantially similar to deposition head 132) includes a frame 532 (Fig. 6). The frame 532 forms an aperture 501 through which a beam 136B of the directed energy source 136 passes. A focusing lens 535 is disposed in the aperture 501 to focus the beam 136B of the directed energy source 136 at a focal point substantially coincident with the location of the melt pool 438. The frame 532 may also form one or more passages 502 through which the beam 136B of the directed energy source 136 passes where the one or more passages 502 are filled with a shield gas 580. The shield gas may be any inert or semi-inert gas that protects the melt pool (and the weld area of the melt pool to the underlying layers of material) from large quantities of oxygen and water vapor. The deposition head 132 includes one or more passages that form deposition nozzles 533 through which direct energy feed particles 316 (such as the masticated particles 310 - Fig. 3) pass. The deposition nozzles 533 are coupled to a respective hopper 110, 614 (Figs. 3 and 4) by the respective transfer lines 125, 625 (Figs. 3 and 4) so as to receive the direct energy feed particles 316 (such as the masticated particles 310) from the respective hopper 110, 614. The direct energy feed particles 316 (such as the masticated particles 310) are ejected from the respective deposition nozzles 533 as particle streams 490. The particles streams 490 are ejected towards the focal point of the beam 136B so that the masticated particles 310 of the particles streams 490 are melted by the directed energy source 136 to form the melt pool 438.

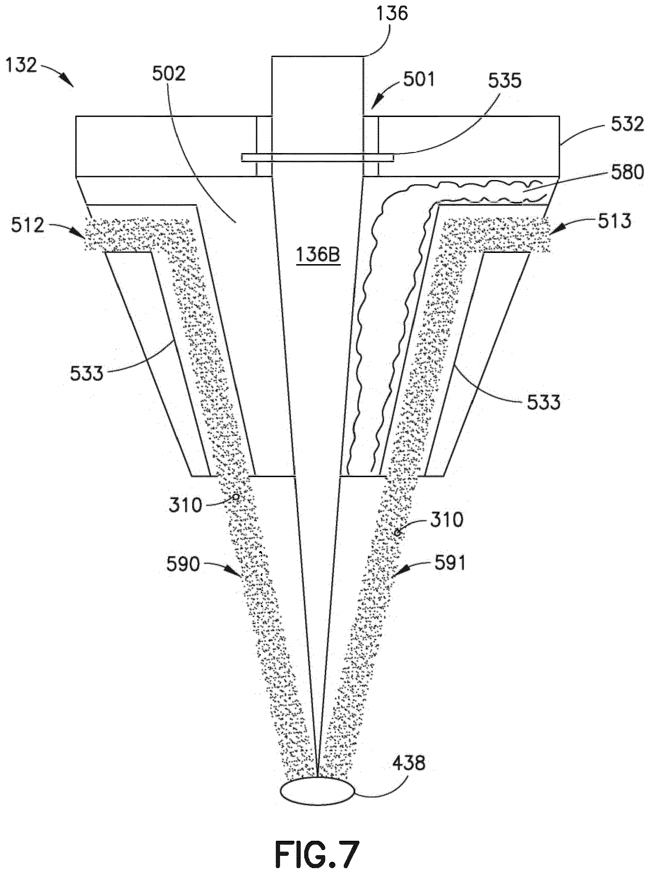

In the aspect illustrated in Fig. 6, a single type of masticated particles 310 flows through the deposition nozzles 533 of the deposition head 132. However, in other aspects, such as illustrated in Fig. 7, there may be two or more different types of direct energy feed particles 512, 513 flowing through respective deposition nozzles 533 of the deposition head 132. The two or more different types of direct energy feed particles 512, 513 employed in the directed energy deposition additive manufacturing apparatus 100 may vary in shape (e.g., conventional spherical powder or masticated particles 310), in chemical composition (e.g., titanium, steel, nickel or aluminum), and/or in mechanical properties. For example, as noted above, direct energy feed particles 512 may be masticated particles 310 formed of titanium or a titanium alloy while the direct energy feed particles 513 may be masticated particles 310 formed of aluminum. In other aspects direct energy feed particles 512 may be the masticated particles, while the direct energy feed particles 316 may be a conventional spherical powder. Any suitable combination of materials may be provided through the respective deposition nozzles 533 to form any desired in situ alloy 499 (see Figs. 4 and 5). The resulting melt pool 438 will then be a mixture/alloy of two or more materials, which will then form an in situ alloy 499 (see Figs. 4 and 5) upon cooling and solidification. In accordance with aspects of the present disclosure, at least one of the direct energy feed particle streams 590, 591 of the present disclosure includes the masticated particles 310.

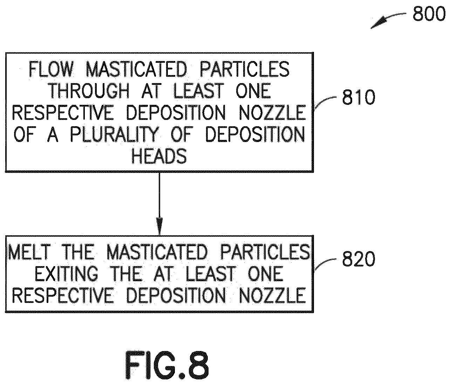

Referring now to Figs. 1A, 1B, 3, 4, and 6-8 an exemplary method 800 of additively manufacturing the part 160 will be described. The method 800 includes flowing the masticated particles 310 through at least one deposition nozzle 533 (Fig. 8, Block 810) of a directed energy deposition additive manufacturing apparatus 100, where each particle of the masticated particles 310 comprises a surface 321 formed by at least angular facets 325. In one aspect, the masticated particles 310 are stored in the hopper 110, 614 (Figs. 3 and 4), which as described above is coupled to the deposition nozzle 533. In one aspect, the hopper 110, 614 is at least periodically vibrated by the vibrating device 185 (Figs. 3 and 4) to induce flowing of the masticated particles 310 from the respective hopper 110, 614 to the respective deposition nozzle 533. In one aspect, more than one type of direct energy feed particles 616 (Fig. 4) are provided so as to flow through a respective deposition nozzle 533 of the directed energy deposition additive manufacturing apparatus 100 so as to form an in situ alloy 499 (see Figs. 4 and 5), wherein at least one of the more than one type of direct energy feed particles 616 comprises the masticated particles 310 having respective surfaces 321 formed by the at least angular facets 325. In one aspect, a first type of faceted particles 320 flows through the at least one respective deposition nozzle 533 of one deposition head 132 of a plurality of deposition heads 132, 632 (Fig. 4), and a second type of faceted particles 320 flows through the at least one respective deposition nozzle 533 of another deposition head 132, 632 of the plurality of deposition heads 132, 632. In one aspect, a first type of direct energy feed particles 616 flows through a first respective deposition nozzle 533 of one deposition head 132 (and/or deposition head 632), and a second type of direct energy feed particles 616 flows through a second respective deposition nozzle 533 the one deposition head 132 (and/or deposition head 632). In one aspect, another of the more than one type of direct energy feed particles 616 comprises spherical powder. In one aspect, each of the more than one type of direct energy feed particles 616 comprises different mechanical properties. The faceted particles have a flowability of less than 50 seconds per 50 grams as determined by Hall flow testing in accordance with, e.g., the ASTM B213 standard.

The masticated particles exiting the respective deposition nozzle 533 are melted (Fig. 8, Block 820) with a directed energy source 136 of the directed energy deposition additive manufacturing apparatus 100 so as to form the part 160.

The following non-limiting examples are provided to illustrate the disclosure.

### EXAMPLES

Hall flow testing measurements were conducted (in accordance with the ASTM B213 standard) on masticated Ti64 particles (having a size distribution of about 45 microns to about 75 microns) and spherical Ti64 powder (having a size distribution of about 45 microns to about 150 microns) to quantify the differences in flowability between masticated particles 310 and conventional spherical powder having spherical particles 617. In order for the feed material for an additive manufacturing apparatus to flow properly from the feed hopper through a transfer line and to the deposition head, the Hall flow test flowability of the feed material should be less than 50 seconds per 50 grams, or less than 45 seconds per 50 grams. For both the masticated Ti64 particles and spherical Ti64 powder, six 25 gram samples were tested in the Hall flow test with the results shown in the Table below.

**TABLE**

| Reading | Powder Type | Weight (g) | | Time (sec) | Tap Required? | Flowability (sec/50grams) |
|---|---|---|---|---|---|---|
| | | Before | After | | | |
| 1 | Masticated Particles | 25 | 24.9 | 20.29 | Yes | 40.74 |
| 2 | Masticated Particles | 25 | 24.8 | 20.55 | Yes | 41.43 |
| 3 | Masticated Particles | 25 | 24.8 | 20.83 | Yes | 42.00 |
| 4 | Masticated Particles | 25 | 24.8 | 20.69 | Yes | 41.71 |
| 5 | Masticated Particles | 25 | 25 | 21.58 | Yes | 43.16 |
| 6 | Masticated Particles | 25 | 24.9 | 21.11 | Yes | 42.39 |
| | | | | | | |
| 1 | Spherical Powder | 25 | 25 | 12.62 | No | 25.24 |
| 2 | Spherical Powder | 25 | 25 | 12.61 | No | 25.22 |
| 3 | Spherical Powder | 25 | 25 | 12.49 | No | 24.98 |
| 4 | Spherical Powder | 25 | 25 | 12.51 | No | 25.02 |
| 5 | Spherical Powder | 25 | 25 | 21.56 | No | 25.12 |
| 6 | Spherical Powder | 25 | 25 | 12.57 | No | 25.14 |

The Hall flow test results indicated that masticated Ti64 particles have a flowability of less than about 44 sec/50 grams, so as to provide a suitable amount of material to the direct energy additive manufacturing apparatus 100 in accordance with the methods of additively manufacturing the part 160 disclosed herein. In contrast, the Hall flow test results for spherical Ti64 powder were less than 26 sec/50 grams. As can be seen in the table, the masticated Ti64 particles may require a tap in order to initiate/induce flow, whereas the spherical Ti64 powder did not require a tap to initiate flow. With the use of masticated particles 310 (Figs. 1A and 1B), the feed hopper 110, 614 (Fig. 4) may need to be intermittently vibrated in order to initiate flow from the hopper 110, 614 through the transfer line 125, 625 (Fig. 4) to the deposition head 132, 632 (Fig. 4). However, noteworthy is that the cost of the masticated Ti64 particles are about 75% to about 90% lower than the spherical Ti64 powder, which provides a tremendous cost reduction opportunity for the methods of additively manufacturing the part 160.

In the figures, referred to above, solid lines, if any, connecting various elements and/or components may represent mechanical, electrical, fluid, optical, electromagnetic, wireless and other couplings and/or combinations thereof. As used herein, "coupled" means associated directly as well as indirectly. For example, a member A may be directly associated with a member B, or may be indirectly associated therewith, e.g., via another member C. It will be understood that not all relationships among the various disclosed elements are necessarily represented. Accordingly, couplings other than those depicted in the drawings may also exist. Dashed lines, if any, connecting blocks designating the various elements and/or components represent couplings similar in function and purpose to those represented by solid lines; however, couplings represented by the dashed lines may either be selectively provided or may relate to alternative examples of the present disclosure. Likewise, elements and/or components, if any, represented with dashed lines, indicate alternative examples of the present disclosure. One or more elements shown in solid and/or dashed lines may be omitted from a particular example without departing from the scope of the present disclosure. Environmental elements, if any, are represented with dotted lines. Virtual (imaginary) elements may also be shown for clarity. Those skilled in the art will appreciate that some of the features illustrated in the figures, may be combined in various ways without the need to include other features described in the figures, other drawing figures, and/or the accompanying disclosure, even though such combination or combinations are not explicitly illustrated herein. Similarly, additional features not limited to the examples presented, may be combined with some or all of the features shown and described herein.

In Figs. 2 and 8, referred to above, the blocks may represent operations and/or portions thereof and lines connecting the various blocks do not imply any particular order or dependency of the operations or portions thereof. Blocks represented by dashed lines indicate alternative operations and/or portions thereof. Dashed lines, if any, connecting the various blocks represent alternative dependencies of the operations or portions thereof. It will be understood that not all dependencies among the various disclosed operations are necessarily represented. Figs. 2 and 8 and the accompanying disclosure describing the operations of the method(s) set forth herein should not be interpreted as necessarily determining a sequence in which the operations are to be performed. Rather, although one illustrative order is indicated, it is to be understood that the sequence of the operations may be modified when appropriate. Accordingly, certain operations may be performed in a different order or substantially simultaneously. Additionally, those skilled in the art will appreciate that not all operations described need be performed.

In the following description, numerous specific details are set forth to provide a thorough understanding of the disclosed concepts, which may be practiced without some or all of these particulars. In other instances, details of known devices and/or processes have been omitted to avoid unnecessarily obscuring the disclosure. While some concepts will be described in conjunction with specific examples, it will be understood that these examples are not intended to be limiting.

Unless otherwise indicated, the terms "first", "second", etc. are used herein merely as labels, and are not intended to impose ordinal, positional, or hierarchical requirements on the items to which these terms refer. Moreover, reference to, e.g., a "second" item does not require or preclude the existence of, e.g., a "first" or lower-numbered item, and/or, e.g., a "third" or higher-numbered item.

Reference herein to "one example" means that one or more feature, structure, or characteristic described in connection with the example is included in at least one implementation. The phrase "one example" in various places in the specification may or may not be referring to the same example.

As used herein, a system, apparatus, structure, article, element, component, or hardware "configured to" perform a specified function is indeed capable of performing the specified function without any alteration, rather than merely having potential to perform the specified function after further modification. In other words, the system, apparatus, structure, article, element, component, or hardware "configured to" perform a specified function is specifically selected, created, implemented, utilized, programmed, and/or designed for the purpose of performing the specified function. As used herein, "configured to" denotes existing characteristics of a system, apparatus, structure, article, element, component, or hardware which enable the system, apparatus, structure, article, element, component, or hardware to perform the specified function without further modification. For purposes of this disclosure, a system, apparatus, structure, article, element, component, or hardware described as being "configured to" perform a particular function may additionally or alternatively be described as being "adapted to" and/or as being "operative to" perform that function.

Different examples of the device(s), apparatus(es) and method(s) disclosed herein include a variety of components, features, and functionalities. It should be understood that the various examples of the device(s), apparatus(es) and method(s) disclosed herein may include any of the components, features, and functionalities of any of the other examples of the apparatus(es) and method(s) disclosed herein in any combination, and all of such possibilities are intended to be within the scope of the present disclosure.

Many modifications of examples set forth herein will come to mind to one skilled in the art to which the present disclosure pertains having the benefit of the teachings presented in the foregoing descriptions and the associated drawings.

Therefore, it is to be understood that the present disclosure is not to be limited to the specific examples illustrated and that modifications and other examples are intended to be included within the scope of the appended claims. Moreover, although the foregoing description and the associated drawings describe examples of the present disclosure in the context of certain illustrative combinations of elements and/or functions, it should be appreciated that different combinations of elements and/or functions may be provided by alternative implementations without departing from the scope of the appended claims. Accordingly, parenthetical reference numerals in the appended claims are presented for illustrative purposes only and are not intended to limit the scope of the claimed subject matter to the specific examples provided in the present disclosure.

## Claims

1. A method of additively manufacturing a part (160), the method comprising:
flowing faceted particles (320) through a deposition nozzle (533) of a powder feed additive manufacturing apparatus (101); and
melting the faceted particles (320) exiting the deposition nozzle (533) so as to form the part (160).

2. The method of claim 1, wherein a particle size distribution (350) of the faceted particles (320) is about 40 microns to about 180 microns.

3. The method of claim 1 or 2, wherein a particle size distribution (350) of the faceted particles (320) is about 40 microns to about 75 microns.

4. The method of any of the claims 1-3, wherein the faceted particles (320) have a flowability of less than 50 seconds per 50 grams as determined by Hall flow testing.

5. The method of any of the preceding claims, wherein the faceted particles (320) comprise one or more of titanium, steel, nickel, and aluminum.

6. The method of any of the preceding claims further comprising:
storing the faceted particles (320) in a hopper (110) coupled to the deposition nozzle (533); and
at least periodically vibrating the hopper (110) to induce flowing of the faceted particles (320) from the hopper (110) to the deposition nozzle (533).

7. The method of any of the preceding claims, further comprising flowing more than one type of direct energy feed particles (512, 513) through a respective deposition nozzle (533) of the powder feed additive manufacturing apparatus (101) so as to form an in situ alloy (499), wherein at least one of the more than one type of direct energy feed particles (512, 513) comprises the faceted particles (320).

8. The method of claim 7, wherein each of the more than one type of direct energy feed particles (512, 513) comprises different mechanical properties.

9. The method of claim 7 or 8, wherein another of the more than one type of direct energy feed particles (512, 513) comprises spherical particles (617).

10. The method of any of the preceding claims, wherein the faceted particles (320) include a surface or surfaces (321) formed of at least angular facets (325).

11. The method of any of the preceding claims, wherein the faceted particles (320) are embrittled or de-embrittled.

12. The method according to any of the preceding claims, wherein the faceted particles are masticated particles.

13. A part obtainable according to the method of any of the preceding claims.

14. Non-spherical Ti6Al-4V additive manufacturing powder feedstock.

15. A method of producing masticated particles from a source material such as Titanium, including the steps of
embrittling the source material,
masticating the embrittled source material into masticated particles,
de-embrittling the masticated particles, and optionally, melting the de-embrittled, masticated particles as a melt pool to form a part.
